# EUROPEAN PATENT APPLICATION

(11) **EP 4 310 971 A2**
(43) Date of publication of application: **24.01.2024**
(21) Application number: 23186826.6
(22) Date of filing: 20.07.2023
(51) Int. Cl.: H01M 10/0525, H01M 50/209, H01M 50/211, H01M 50/247

(54) **RECHARGEABLE BATTERY PACK WITH IMPROVED ENERGY DENSITY**

(30) Priority: 22.07.2022 US 202263369200 P
(71) Applicant: Milwaukee Electric Tool Corporation, Brookfield, WI 53005 (US)
(72) Inventor: SUBRAMANIAN, Aditya, Milwaukee, 53202 (US); FASSBENDER, Kyle C., Brookfield, 53005 (US); SHI, QingFang, Brookfield, 53045 (US); GARLOV, Alexei, 19707 Hockessin (DE)
(74) Representative: Forresters IP LLP

(57) **Abstract**

A battery pack including a housing at least partially defining an interior volume therein, a docking interface, and a cell pack assembly at least partially positioned within the interior volume. The cell pack assembly includes a plurality of battery cells, where each battery cell includes a body, an anode extending from the body, and a cathode extending from the body, where the cell pack assembly defines cell packing volume in the shape of a rectangular-prism that completely encompasses each body portion of the plurality of cells, and where the cell pack assembly is packaged such that the combined volume of the body portions of each battery cell of the plurality of battery cells occupies no less than 80% of the cell packing volume.

## Description

### CROSS-REFERENCE OF RELATED APPLICATION

This application claims priority to prior-filed, co-pending U.S. Provisional Application No. 63/369,200 filed on July 22, 2022, the entire contents of which is hereby incorporated by reference.

### FIELD

The present invention relates to rechargeable battery packs, and more specifically to a rechargeable battery pack having improved energy density.

### BACKGROUND

Rechargeable battery packs typically store electrical power in a plurality of individual cylindrically shaped battery cells contained within the housing thereof.

### SUMMARY

In one aspect, a battery pack including a housing at least partially defining an interior volume therein, a docking interface, and a cell pack assembly at least partially positioned within the interior volume, the cell pack assembly including a plurality of battery cells, where each battery cell includes a body, an anode extending from the body, and a cathode extending from the body, where the cell pack assembly defines cell packing volume in the shape of a rectangular-prism that completely encompasses each body portion of the plurality of cells, and where the cell pack assembly is packaged such that the combined volume of the body portions of each battery cell of the plurality of battery cells occupies no less than 80% of the cell packing volume.

Alternatively or additionally, in any combination, where the cell pack assembly is packaged such that the combined volume of the body portions of each battery cell of the plurality of battery cells occupies no less than 85% of the cell packing volume.

Alternatively or additionally, in any combination, where the cell pack assembly is packaged such that the combined volume of the body portions of each battery cell of the plurality of battery cells occupies no less than 87.5% of the cell packing volume.

Alternatively or additionally, in any combination, where each battery cell of the plurality of battery cells has the same exterior dimensions.

Alternatively or additionally, in any combination, where each battery cell of the plurality of battery cells are the same battery construction.

Alternatively or additionally, in any combination, where the cell pack assembly includes at least five individual battery cells included therein.

Alternatively or additionally, in any combination, where the body portion of each battery cell forms a rectangular-prism shape.

In another aspect, a battery pack including a housing at least partially defining an interior volume therein, a docking interface, and a cell pack assembly at least partially positioned within the interior volume, the cell pack assembly including a plurality of battery cells, where each battery cell includes a body portion, an anode extending from the body portion, and a cathode extending from the body portion, where the cell assembly defines a cell packing volume in the shape of a rectangular-prism that completely encompasses each body portion of the plurality of battery cells, and where the cell assembly is packaged such that the cell packing volume stores no less than 150 Ah/L of energy when fully charged.

Alternatively or additionally, in any combination, where the cell pack assembly is packaged such that the cell packing volume stores between 150 Ah/L and 200 Ah/L of energy when fully charged.

Alternatively or additionally, in any combination, where the cell pack assembly is packaged such that the cell packing volume stores approximately 166.7 Ah/L of energy when fully charged.

Alternatively or additionally, in any combination, where each battery cell of the plurality of battery cells are of the same construction.

Alternatively or additionally, in any combination, where the body portion of each battery cell includes a body height, a body width, and a body length, and wherein the body height is at least 3 mm.

Alternatively or additionally, in any combination, where the body height is 7 mm.

In another aspect, a battery pack including a housing at least partially defining an interior volume therein, a docking interface, and a cell pack assembly at least partially positioned within the interior volume, the cell pack assembly including a plurality of battery cells arranged in a stack along a stack axis, where each battery cell defines a battery cell height parallel to the stack axis, a plurality of intermediate members positioned between adjacent battery cells, where each intermediate member defines an intermediate member height parallel to the stack axis, and where the ratio of battery cell height to intermediate member height is at least 3:1.

Alternatively or additionally, in any combination, where the ratio of battery cell height to intermediate member height is at least 7:1.

Alternatively or additionally, in any combination, where each battery cell of the plurality of battery cells has the same battery cell height.

Alternatively or additionally, in any combination, where each intermediate member of the plurality of intermediate members has the same intermediate member height.

Alternatively or additionally, in any combination, where each battery cell of the plurality of battery cells includes a body portion, an anode extending from the body portion, and a cathode extending from the body portion, and where the body portion forms a rectangular-prism shape.

Alternatively or additionally, in any combination, where at least one of the intermediate members forms a rectangular-prism shape.

### BRIEF DESCRIPTION OF THE DRAWINGS

FIG. 1 is a perspective view of rechargeable battery pack having improved energy density.
FIG. 2 is a section view taken along line 2-2 of FIG. 1.
FIG. 3 is a perspective view of the cell pack assembly of the rechargeable battery pack of FIG. 1.
FIG. 4 is a side view of the cell pack assembly of FIG. 3.
FIG. 5 is a perspective view of a battery cell from the cell pack assembly of FIG. 3.
FIGS. 6 and 7 illustrate another embodiment of a cell pack assembly.
FIGS. 8 and 9 illustrate another embodiment of a cell pack assembly.
FIGS. 10 and 11 illustrate another embodiment of a cell pack assembly.
FIGS. 12-15 illustrates various embodiment of a cell pack assembly.
FIG. 16 illustrates a prior art embodiment of a cell pack assembly.
FIGS. 17 and 18 compare 2P and 3P style battery packs with similarly sized 1P style battery packs.

Before any embodiments of the disclosure are explained in detail, it is to be understood that the disclosure is not limited in its application to the details of construction and the arrangement of components set forth in the following description or illustrated in the following drawings. The disclosure is capable of other embodiments and of being practiced or of being carried out in various ways. Also, it is to be understood that the phraseology and terminology used herein is for the purpose of description and should not be regarded as limiting.

### DETAILED DESCRIPTION

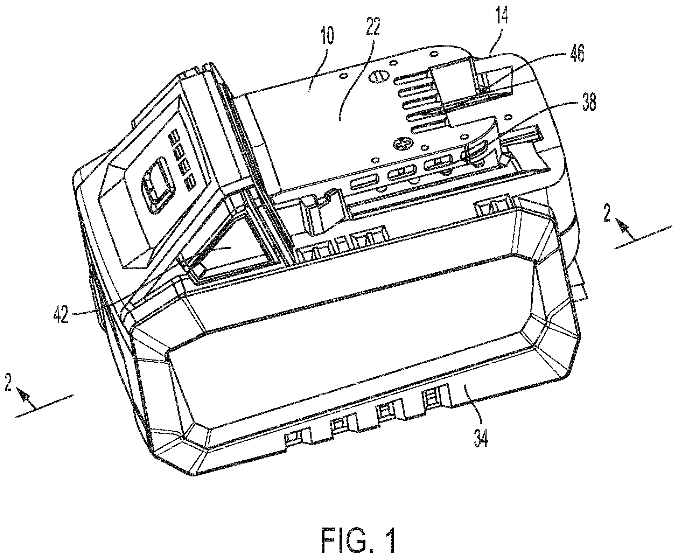

FIGS. 1-2 generally illustrate a rechargeable battery pack 10 having improved energy density for use to selectively power an electrically powered device such as a power tool and the like (not shown). The battery pack 10 includes a housing 14 at least partially defining an interior volume 18 therein, a docking interface 22 at least partially formed by the housing 14, a cell pack assembly 26 positioned within the interior volume 18, and a battery management system 30 in electrical communication with both the cell pack assembly 26 and the docking interface 22 and configured to selectively direct the flow of electrical energy therebetween.

As shown in FIG. 1, the housing 14 of the battery pack 10 is a clamshell construction including a first or upper housing portion 14a and a second or lower housing portion 14b. When assembled, the upper housing portion 14a is fixedly coupled to the lower housing portion 14b (e.g., by snaps, fasteners, and the like) to at least partially enclose the interior volume 18 therebetween. As shown in FIG. 1, housing 14 may also include a pair of rubberized bumpers 34 coupled thereto and configured to help mitigate the transfer of any external shock forces into the housing 14 during operation.

As shown in FIG. 1, the docking interface 22 of the battery pack 10 serves as a mounting location by which the battery pack 10 may be both physically and electrically connected to another device (e.g., the power tool, a battery charger, and the like). In the illustrated embodiment, the docking interface 22 is formed integrally with the upper housing portion 14a and includes a pair of rails 38, a pair of user actuatable latches 42, and one or more electrical contacts 46 each configured to form temporary electrical connection with an external device for the transfer of electrical power therebetween. While the illustrated docking interface 22 is illustrated as a form of "slide and lock" system, it is understood that in other embodiments different forms and styles of connection may be used.

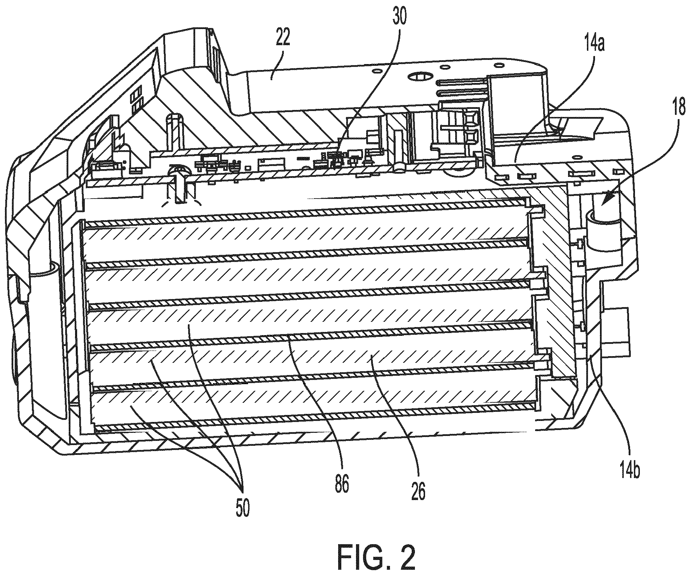

Looking to FIG. 2, the cell pack assembly 26 of the rechargeable battery pack 10 includes a plurality of individual rechargeable battery cells 50 physically arranged and packaged in close proximity to one another in a manner configured to minimize unused space and maximize overall energy storage density. More specifically, the individual cells 50 are coupled or otherwise secured to each other to form a signal stack that, in turn, may be fitted into the interior volume 18 of the housing 14. In the illustrated embodiment, each of the individual rechargeable battery cells 50 are also wired together (e.g., in a combination of series and/or parallel groupings) so that the resulting cell pack assembly 26 is configured to provide a single, combined electrical output to the docking interface 22 via the battery management system 30 at the desired power levels. While the illustrated embodiment of the battery pack 10 includes a single cell pack assembly 26 positioned completely within the interior volume 18 thereof, it is understood that in other embodiments of the battery pack 10 additional cell pack assemblies 26 may be present.

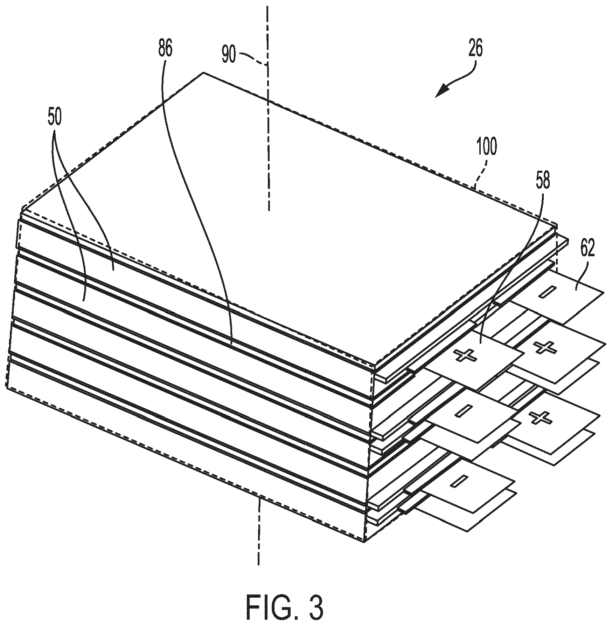

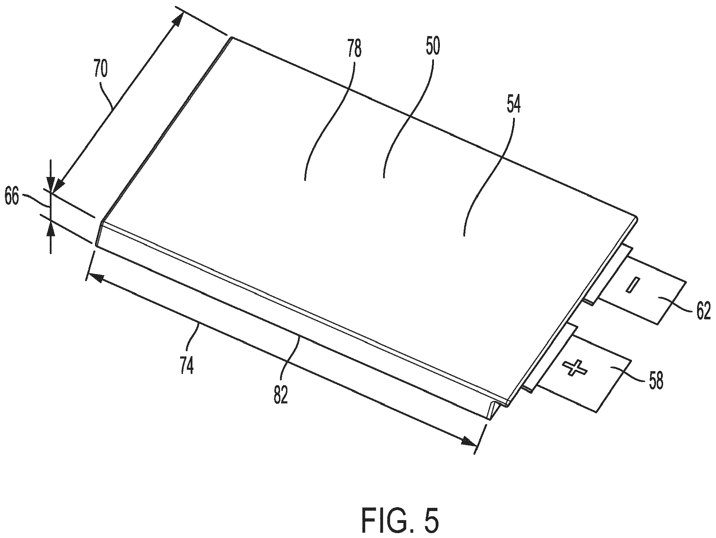

As shown in FIG. 5, each individual battery cell 50 of the cell pack assembly 26 is a pouch-style cell having a pouch or body portion 54, a positive tab 58 (e.g., positive terminal) extending outwardly from the body portion 54, and a negative tab 62 (e.g., negative terminal) extending outwardly from the body portion 54. In the illustrated embodiment, both the negative tab 62 and positive tab 58 exit the body portion 54 along a single edge thereof (see FIG. 3), however in other embodiments, the negative tab 62 and positive tab 58 may exit from the body portion 54 at any location as needed to minimize the distances included in the resulting electrical connections.

The body portion 54 of each rechargeable cell 50 includes an external semi-flexible pouch enclosing a sealed internal battery volume (not shown) therein. The sealed battery volume, in turn, contains a number of layered anode and cathode materials interlaced with separators therebetween to produce a rechargeable lithium-polymer cell. The specific layout of the cell being determinate on the desired capabilities of the finished battery pack 10.

While the illustrated rechargeable cells 50 are generally based on lithium-ion technology, it is understood that in other embodiments different forms of rechargeable battery chemistry or layout may be used. In the illustrated embodiment, the construction of the internal battery volume is such that the body portion 54 of the cell 50 is capable of storing 650 Wh/L when fully charged.

In the illustrated embodiment, the body portion 54 of each cell 50 forms a substantially rectangular-prism shape defining a cell height 66, a cell width 70, and a cell length 74. As shown in FIG. 3, the overall shape of the body portion 54 is generally flat and plate-like such that the cell length 74 and cell width 70 are proportionally much larger than the cell height 66. The illustrated shape also produces planar top and bottom surfaces 78, 82 suitable for stacking. While the illustrated body portions 54 are generally rectangular in cross-sectional shape taken along a cutting plane set parallel to the top and bottom surfaces 78, 82, it is understood that in other embodiments different cross-sectional sizes and shapes may be used while still maintaining the overall "flat" profile. For example, the exterior profile of the body portion 54 of each cell 50 may be modified to correspond with the size and shape of the available interior volume.

As shown in FIG. 3, each individual battery cell 50 of the cell pack assembly 26 is generally organized into a "stacked" configuration such that the top surface 78 of one cell 50 is positioned adjacent to the bottom surface 82 of an adjacent cell 50 and so on. The cells 50 are also oriented such that the perimeter of each body portion 54 is generally aligned producing an overall rectangular-prism shape.

In some embodiments, the cell pack assembly 26 may further include one or more intermediate layers 86 positioned between adjacent cells 50. The intermediate layers 86 may include, but are not limited to, an insulating layer, a cooling layer, an adhesive layer, a shielding layer, and the like. In still other embodiments, more than one intermediate layer 86 may be present between a pair of adjacent cells 50. In the illustrated embodiment, the size (e.g., thickness) of the intermediate layers is minimized as the space is being occupied by items that are not battery cells. As such, ratio of the cell height 55 relative to the intermediate layer height 88 is 3:1. In other embodiments, the ratio of the cell height 55 relative to the intermediate layer height 88 is 1.5:1, 2:1, 4:1, 5:1, 6:1, 7:1, 8:1, 9:1, and 10:1. In still other embodiments, the ratio of the cell height 55 relative to the intermediate layer height 88 is between 3:1 and 10:1, between 3:1 and 7:1, between 5:1 and 10:1, and between 7:1 and 10:1.

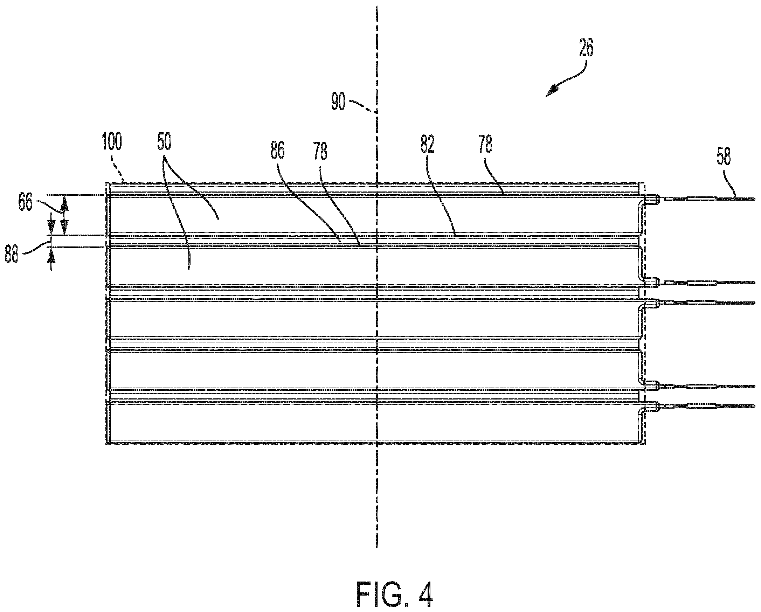

The resulting assembly of cells 50 and intermediate layers 86 also defines a stack axis 90 generally oriented normal to and passing through the geometric center of the top and bottom surfaces 78, 82 of each cell 50. The stack axis 90 is configured to represent be aligned with the direction in which the individual cells 50 are stacked. As shown in FIG. 4, the stack axis 90 is parallel to the height dimension 66 of each stacked cell 50.

Together, the body portions 54 of the battery cells 50 of the cell pack assembly 26 also define a cell packing volume or CPV 100 (see FIGS. 3 and 4). For the purposes of this application, the CPV 100 of an item is defined as the smallest possible rectangular-prism reference box that can completely enclose the item therein. More specifically, the CPV 100 for the present cell pack assembly 26 generally includes the smallest possible rectangular-prism reference box that can enclose the body portions 54 of all the stacked cells 50 therein - ignoring any negative tabs 62, positive tabs 58, or flashing extending outwardly therefrom (see FIG. 4).

In the illustrated construction, the body portions 54 of the cell pack assembly 26 are stacked and packaged such that the combined volume of the body portions 54 of each of the stacked cells 50 occupies no less than 80% of the overall volume of the CPV 100. In other embodiments, the combined volume of the body portions 54 of each of the battery cells 50 may occupy no less than 81%, 82%, 83%, 84%, 85%, 86%, 87%, or 87.5% of the overall volume of the CPV 100. In still other embodiments the combined volume of the body portions 54 of each of the battery cells 50 may occupy between 80% and 90%, between 80% and 87.5%, between 85% and 87.5%, and between 85% and 90% of the overall volume of the CPV 100.

The cells 50 of the cell pack assembly 26 are also packaged such that the corresponding CPV 100 is capable of storing no less than 464 Wh/L of energy when fully charged. In other embodiments, the battery pack assembly 256 is packaged such that the CPV 100 is capable of storing no less than 475 Wh/L, 500 Wh/L, 525 Wh/L, 550 Wh/L, 575 Wh/L, 600 Wh/L, 625 Wh/L, and 650 Wh/L of energy when fully charged. In still other embodiments, the battery pack assembly 256 is packaged such that the corresponding CPV 100 is capable of storing between 464 Wh/L and 600 Wh/L, 464 Wh/L and 650 Wh/L, 500 Wh/L and 600 Wh/L, and 525 Wh/L and 600 Wh/L of energy when fully charged.

Furthermore, the cells 50 of the cell pack assembly 26 are packaged such that the corresponding CPV 100 is capable of storing no less than 129 Ah/L when fully charged. In other embodiments, the CPV 100 is capable of storing no less than 140 Ah/L, 150 Ah/L, 160 Ah/L, and 166.7 Ah/L when fully charged. In still other embodiments, the cells 50 of the cell pack assembly 26 are packaged such that the corresponding CPV 100 is capable of storing between 129 Ah/L and 166.7 Ah/L, 129 Ah/L and 170 Ah/L, and 140 Ah/L and 166.7 Ah/L when fully charged.

Once assembled, the cell pack assembly 26 may be placed into the interior volume 18 of the battery housing 14 and wired into place. In the illustrated embodiment, each cell 50 of the cell pack assembly 26 has the same construction and therefore each body portion 54 has similar exterior dimensions. In other embodiments, different cell constructions and/or cell styles forming different sizes and shapes may also be combined to produce the cell pack assembly 26.

In addition to minimizing unused volume and maximizing energy density within the interior volume 18 of the battery pack 10, the cell pack assembly 26 is also configured to utilize and package the individual battery cells 50 to minimize the number of electrical connections required to electrically integrate the cell pack assembly 26 into the battery for operation and to minimize any losses occurring at any given connection. More specifically, each cell 50 generally requires the creation of two electrical joints to electrically incorporate the corresponding cell 50 into the battery pack 10 for use (e.g., one to connect the anode and one to connect the cathode). Each electrical joint, in turn, imparts resistance to the circuit.

In the illustrated embodiment, each cell 50 is joined to the battery pack 10 using a weld-type connection whereby the weld area is greater than 3.13 mm². In other embodiments each cell is joined using a weld-type connection whereby the weld area is greater than 6.65 mm², 16.27 mm², 27.03 mm², and 36.65 mm².

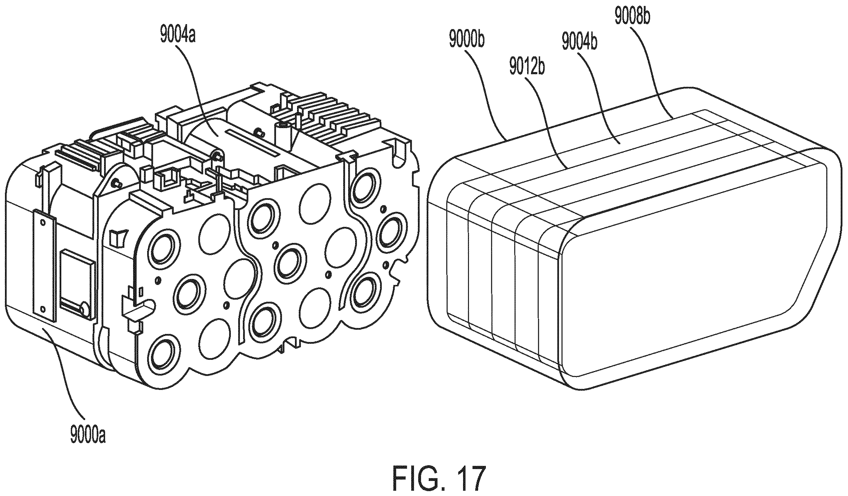

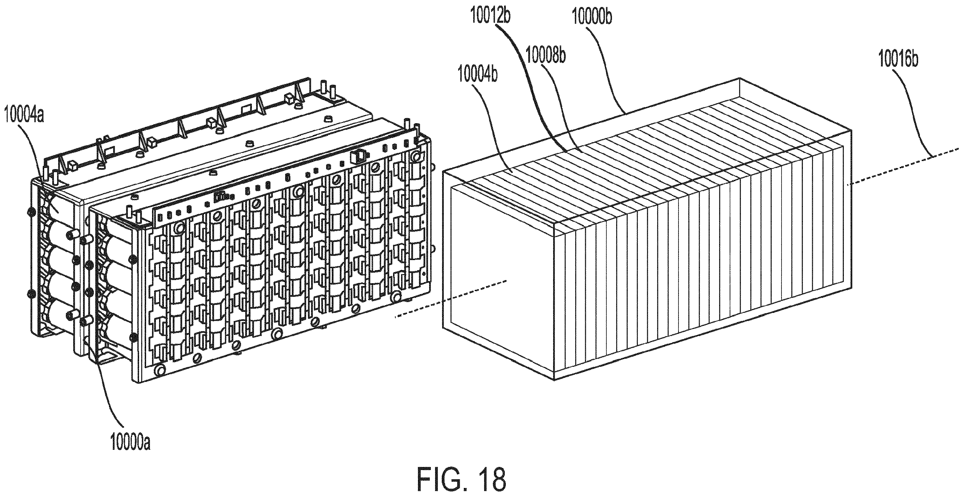

In other embodiments, the cell pack assembly 26 may minimize any losses occurring due to the electrical connections by reducing the number of connections required. More specifically, the cell pack assembly 26 may be configured such that a 2P or 3P style battery can be replaced with a 1P system whereby the number of connections are reduced by a magnitude of 2 or 3, respectively. In such systems, the 1P cell is configured to maintain the original power output requirements within the same or a smaller housing (see FIGS. 17 and 18).

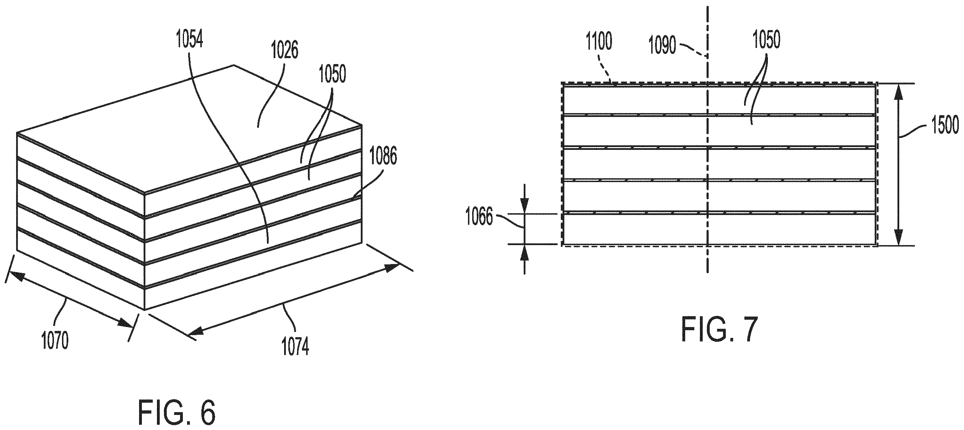

FIGS. 6 and 7 illustrate a first alternative embodiment of the cell pack assembly 1026. The cell pack assembly 1026 includes a plurality (e.g., five) rechargeable battery cells 1050, each having a first alternative construction and wired for a 5S1P layout. The cells 1050, in turn, are stacked vertically atop one another with a 1 mm thick intermediate layer 1086 positioned therebetween. The body portions 1054 of each cell 1050 are rectangular-prism in shape having a 65 mm body width 1070, a 90 mm body length 1074, and a 7 mm body height 1066. Together, the resulting combination of the five body portions 1054 and the five intermediate layers 1086 define a CPV 1100 that is 65mm wide, 90mm long, and 40 mm high (see FIG. 7). As a result, the body portions 1054 of the battery cells 1050 contained within the cell pack assembly 1026 occupy 87.5% of the overall CPV 1100 volume. The ratio between the body height 1066 and the intermediate layer height 88 is 7:1.

Furthermore, the alternating construction of the battery cells 1050 and intermediate layers 1086 result in a cell pack assembly 1026 whereby no less than 87.5% of the vertical height 1500 of the CPV 1100 (e.g., parallel to the stack axis 1090) is occupied by the height of the battery cells 1050. Stated alternatively, only 12.5% of the vertical height of the CPV 1100 is occupied by the intermediate layers 1086.

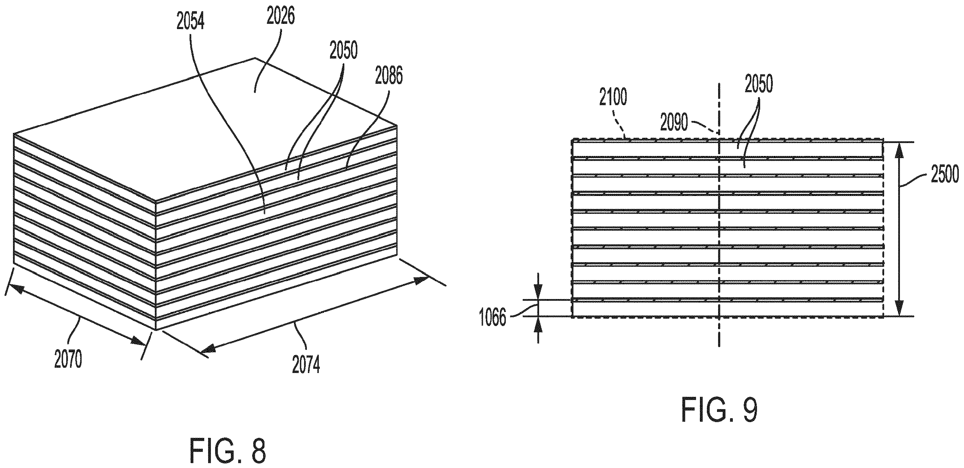

FIGS. 8 and 9 illustrate a second alternative embodiment of the cell pack assembly 2026. The cell pack 2026 includes a plurality (e.g., ten) rechargeable battery cells 2050, each having a second alternative construction and wired in a 5S2P configuration. The cells 2050, in turn, are stacked vertically atop one another with a 1 mm thick intermediate layer 2086 positioned therebetween. The body portions 2054 of each cell 2050 are rectangular-prism in shape having a 65 mm body width 2070, a 90 mm body length 2074, and a 3 mm body height 2066. Together, the resulting combination of the ten body portions 2054 and the ten intermediate layers 2086 define a CPV 2100 that is 65mm wide, 90mm long, and 40 mm high (see FIG. 9). As a result, the body portions 2054 of the battery cells 2050 contained within the cell pack assembly 2026 occupy 75% of the overall CPV 2100 volume. The ratio of the body height 2066 to the intermediate layer height 88 is 3:1.

Furthermore, the alternating construction of the battery cells 2050 and intermediate layers 2086 result in a cell pack assembly 2026 whereby no less than 75% of the vertical height 2500 of the CPV 2100 (e.g., parallel to the stack axis 2090) is occupied by the combined height of the battery cells 2050. Stated alternatively, 25% of the vertical height of the CPV 2100 is occupied by the intermediate layers 2086.

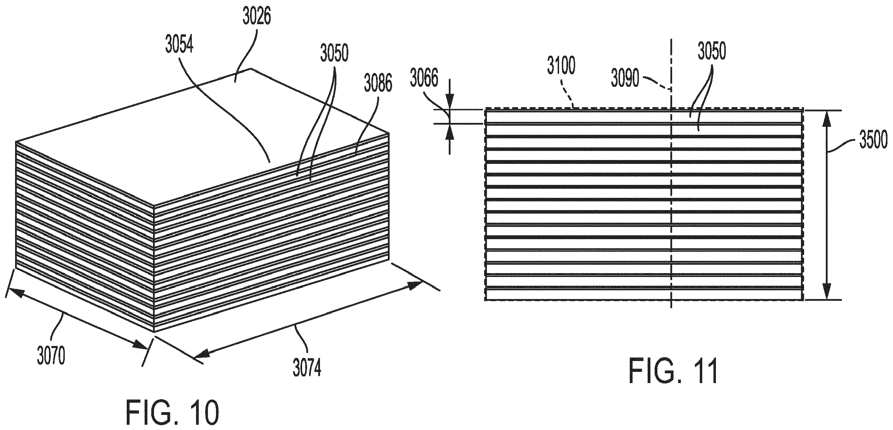

FIGS. 10 and 11 illustrate a third alternative embodiment of the cell pack assembly 3026. The cell pack assembly 3026 includes a plurality (e.g., 15) rechargeable battery cells 3050, each having a third alternative construction and wired in a 5S3P configuration. The cells 3050, in turn, are stacked vertically atop one another with a 1 mm thick intermediate layer 3086 positioned therebetween. The body portions 3054 of each cell 3050 are rectangular-prism in shape having a 65 mm body width 3070, a 90 mm body length 3074, and a 1.67 mm body height 3066. Together, the resulting combination of the 15 body portions 3054 and the 15 intermediate layers 3086 define a CPV 3100 that is 65mm wide, 90mm long, and 40 mm high (see FIG. 11). As a result, the body portions 3054 of the battery cells 3050 contained within the cell pack assembly 3026 occupy 62.5% of the overall CPV 3100 volume. The ratio of the body height 3066 to the intermediate layer height 88 is 1.67: 1.

Furthermore, the alternating construction of the battery cells 3050 and intermediate layers 3086 result in a cell pack assembly 3026 whereby no less than 62.5% of the vertical height 3500 of the CPV 3100 (e.g., parallel to the stack axis 3090) is occupied by the height of the battery cells 3050. Stated alternatively, 37.5% of the vertical height 3500 of the CPV 3100 is occupied by the intermediate layers 3086.

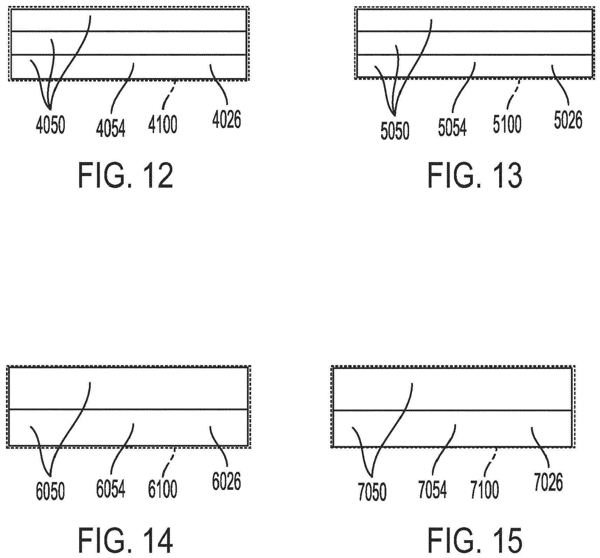

FIG. 12 illustrates a fourth alternative embodiment of the cell pack assembly 4026. The cell pack assembly 4026 includes a plurality of rechargeable battery cells 4050, each having the same fourth alternative battery cell construction. In the illustrated construction, the cell pack assembly 4026 includes three individual cells 4050 stacked vertically atop one another with no intermediate layers therebetween. The body portions 4054 of each cell 4050 form a rectangular-prism shape having an overall body portion 4054 volume of 24 cc. The cells 4050 are also able to store 4 Ah of charge such that the body portion 4054 has an energy density of 650 Wh/L. Together, the three body portions 4054 of the cells 4050 are packaged such that they produce a CPV 4100 of 72 cc. As such, the resulting CPV 4100 has an energy density of 650 Wh/L and 175 Ah/L.

FIG. 13 illustrates a fifth alternative embodiment of the cell pack assembly 5026. The cell pack assembly 5026 includes a plurality of rechargeable battery cells 5050, each having the same fifth alternative battery cell construction. In the illustrated construction, the cell pack assembly 5026 includes three individual cells 5050 stacked vertically atop one another with no intermediate layers therebetween. The body portions 5054 of each cell 5050 form a rectangular-prism shape having an individual body portion 5054 volume of 30 cc. The cells 5050 are able to store 5 Ah of charge such that the body portion 5054 has an energy density of 600 Wh/L. Together, the three body portions 5054 of the cells 5050 are packaged such that they produce a CPV 5100 of 90 cc. As such, the resulting CPV 5100 has an energy density of 650 Wh/L and 175 Ah/L.

FIG. 14 illustrates a sixth alternative embodiment of the cell pack assembly 6026. The cell pack assembly 6026 includes a plurality of rechargeable battery cells 6050, each having the same sixth alternative battery cell construction. In the illustrated construction, the cell pack assembly 6026 includes two individual cells 6050 stacked vertically atop one another with no intermediate layers therebetween. The body portions 6054 of each cell 6050 form a rectangular-prism shape having an overall body portion 6054 volume of 36 cc. The cells 6050 are able to store 6 Ah of charge such that the body portion 6054 has an energy density of 600 Wh/L. Together, the two body portions 6054 of the cells 6050 are packaged such that they produce a CPV 6100 of 72 cc. As such, the resulting CPV 6100 has an energy density of 650 Wh/L and 175 Ah/L.

FIG. 15 illustrates a seventh alternative embodiment of the cell pack assembly 7026. The cell pack assembly 7026 includes a plurality of rechargeable battery cells 7050, each having the same seventh alternative battery cell construction. In the illustrated construction, the cell pack assembly 7026 includes two individual cells 7050 stacked vertically atop one another with no intermediate layers therebetween. The body portions 7054 of each cell 7050 form a rectangular-prism shape having an overall body portion 7050 volume of 45 cc. The cells 7050 are able to store 7.5 Ah of charge apiece such that the body portion 7054 has an energy density of 600 Wh/L. Together, the two body portions 7054 of the cells 7050 are packaged such that they produce a CPV 7100 of 90 cc. As such, the resulting CPV 5100 has an energy density of 650 Wh/L and 175 Ah/L.

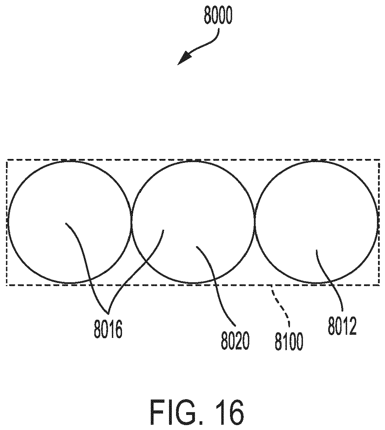

FIG. 16 illustrates a prior art battery pack 8000 for use with a battery powered device such as a power tool (not shown). The cell pack assembly 8012 includes a plurality of rechargeable battery cells 8016, each having the same cylindrical battery cell construction. In the illustrated construction, the cell pack assembly 8012 includes three individual cells 8016 each oriented parallel to and stacked horizontally next to one another (see FIG. 16). The body portions 8020 of each cell 8016 are cylindrical in shape having an individual cell volume of 24 cc. The cells 8016 are able to store 4 Ah of charge such that each body portion 8020 has an energy density of 650 Wh/L. Together, the three body portions 8020 are packaged such that they produce a CPV 8100 of 93 cc. As such, the resulting CPV 8100 has an energy density of 464.5 Wh/L and 129 Ah/L. Furthermore, the three cells 8016 are packaged such that the combined volume of the three bod portions 8020 occupy 79% of the total CPV 8100 volume.

FIG. 17 compares a first battery housing 9000a with a first exterior shape containing a plurality of cylindrical cells 9004a to a second battery housing 9000b with the same first exterior shape but containing a plurality of pouch style cells 9004b. The cells 9004b, in turn, have a planar top surface 9008b and bottom surface 9012b as discussed above but also contain a non-rectangular cross-sectional shape taken parallel to the top surface 9008b and the bottom surface 9012b. The cells 9004a are in one of a 2P or 3P layout while the cells 9004b are in a 1P layout.

FIG. 18 compares a first battery housing 10000a with a first exterior shape containing a plurality of cylindrical cells 10004a to a second battery housing 10000b with the same first exterior shape but containing a plurality of pouch style cells 10004b. The cells 10004b, in turn, have a planar top surface 10008b and bottom surface 10012b as discussed above and are oriented such that the axial stacking height (e.g., along the axis 10016b) of the stack of cells 10000b is greater than both the length and width of an individual cell 10000b taken perpendicular to the axis 10016b. The cells 10004a are in one of a 2P or 3P layout while the cells 10004b are in a 1P layout.

## Claims

1. A battery pack comprising:
a housing at least partially defining an interior volume therein;
a docking interface; and
a cell pack assembly at least partially positioned within the interior volume, the cell pack assembly including:
a plurality of battery cells, wherein each battery cell includes a body, an anode extending from the body, and a cathode extending from the body,
wherein the cell pack assembly defines cell packing volume in the shape of a rectangular-prism that completely encompasses each body portion of the plurality of cells, and
wherein the cell pack assembly is packaged such that the combined volume of the body portions of each battery cell of the plurality of battery cells occupies no less than 80% of the cell packing volume.

2. The battery pack of claim 1, wherein the cell pack assembly is packaged such that the combined volume of the body portions of each battery cell of the plurality of battery cells occupies no less than 85% of the cell packing volume.

3. The battery pack of claim 1, wherein the cell pack assembly is packaged such that the combined volume of the body portions of each battery cell of the plurality of battery cells occupies no less than 87.5% of the cell packing volume.

4. The battery pack of claim 1, wherein each battery cell of the plurality of battery cells has the same exterior dimensions.

5. The battery pack of claim 1, wherein each battery cell of the plurality of battery cells are the same battery construction.

6. The battery pack of claim 1, wherein the cell pack assembly includes at least five individual battery cells included therein.

7. The battery pack of claim 1, wherein the body portion of each battery cell forms a rectangular-prism shape.

8. The battery pack of claim 1, wherein the cell assembly defines a cell packing volume in the shape of a rectangular-prism that completely encompasses each body portion of the plurality of battery cells, and wherein the cell assembly is packaged such that the cell packing volume stores no less than 150 Ah/L of energy when fully charged.

9. The battery pack of claim 8, wherein the cell pack assembly is packaged such that the cell packing volume stores between 150 Ah/L and 200 Ah/L of energy when fully charged.

10. The battery pack of claim 8, wherein the cell pack assembly is packaged such that the cell packing volume stores approximately 166.7 Ah/L of energy when fully charged.

11. The battery pack of claim 8, wherein each battery cell of the plurality of battery cells are of the same construction.

12. The battery pack of claim 8, wherein the body portion of each battery cell includes a body height, a body width, and a body length, and wherein the body height is at least 3 mm.

13. The battery pack of claim 12, wherein the body height is 7 mm.

14. The battery pack of claim 1, wherein the plurality of battery cells are arranged in a stack along a stack axis, wherein each battery cell defines a battery cell height parallel to the stack axis, a plurality of intermediate members positioned between adjacent battery cells, wherein each intermediate member defines an intermediate member height parallel to the stack axis, and wherein the ratio of battery cell height to intermediate member height is at least 3:1.

15. The battery pack of claim 14, wherein the ratio of battery cell height to intermediate member height is at least 7:1.
